# EUROPEAN PATENT APPLICATION

(11) **EP 4 838 101 A1**
(43) Date of publication of application: **11.11.2026**
(21) Application number: 26171880.3
(22) Date of filing: 13.04.2026
(51) Int. Cl.: F04D 29/52, F01D 21/04

(54) **MULTILAYER FAN CONTAINMENT SYSTEM FOR GAS TURBINE ENGINES**

(30) Priority: 08.05.2025 US 202519202486
(71) Applicant: Honeywell International Inc., Charlotte, NC 28202 (US)
(72) Inventor: DMYTRENKO, Dmytro, Charlotte, 28202 (US); SINHA, Sunil Kumar, Charlotte, 28202 (US)
(74) Representative: Ingrassia, Fisher & Lorenz UK Ltd.

(57) **Abstract**

A multilayer fan containment system (250) for a gas turbine engine that has a plurality of metallic fan blades (202) includes a metal fan containment ring (252), a metal honeycomb structure (254), a metal barrier structure(256), and an abradable coating layer (258). The fan containment ring has a first radial thickness, the honeycomb structure has a second radial thickness, the barrier structure has a third radial thickness, and the abradable coating layer has a fourth radial thickness. The first radial thickness is either greater than the third radial thickness, less than third radial thickness, or equal to the third radial thickness. The second radial thickness is greater than the third radial thickness and the fourth radial thickness, and is either greater than the first radial thickness or equal to the first radial thickness. The fourth radial thickness is greater than at least the third radial thickness.

## Description

### TECHNICAL FIELD

The present disclosure generally relates to fan containment systems for gas turbine engines, and more particularly relates to a multilayer fan containment system for a gas turbine engine with metallic fan blades.

### BACKGROUND

Gas turbine engines may be used to power various types of vehicles and systems. One particular type of gas turbine engine that may be used to power aircraft is a turbofan gas turbine engine. A turbofan gas turbine engine may include, for example, five major sections: a fan section, a compressor section, a combustor section, a turbine section, and an exhaust section.

The fan section is positioned at the inlet section of the engine and includes a fan that induces air from the surrounding environment into the engine and accelerates a fraction of this air toward the compressor section. The compressor section raises the pressure of the air it receives from the fan section and directs a majority of the high-pressure air into the combustor section. In the combustor section, the high-pressure air is mixed with fuel and the mixture is combusted. The high-temperature combusted gas is then directed into the turbine section where it expands through and rotates each turbine to drive various components within the engine or aircraft. The air is then exhausted through a propulsion nozzle disposed in the exhaust section.

Though highly unlikely, it is postulated that a fan blade (or portion thereof) in the fan section may become detached from a rotor. Thus, turbofan gas turbine engines typically include a fan containment system. The purpose of a typical fan containment system is to provide structure of sufficient strength to withstand the dynamic impact loads of a detached blade (and its associated fragments) without cracking it or piercing a hole through which debris could escape in the radial direction during a fan blade detachment event. To achieve this purpose, the fan casing is typically fabricated using a metallic material, the thickness of the case increased, additional structure material is added, and/or other strengthening mechanisms may be used. Overall, these current techniques increase the overall weight of the engine, which may undesirably decrease engine efficiency.

Hence, there is a need to for a fan containment systems that provides improved impact resistance without unduly increasing the weight of the fan section and the engine. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a multilayer fan containment system for a gas turbine engine that has a plurality of metallic fan blades includes a metal fan containment ring, a metal honeycomb structure, a metal barrier, and an abradable coating layer. The metal fan containment ring surrounds the plurality of fan blades and has an inner surface and an outer surface. The metal honeycomb structure is bonded directly to the inner surface of the containment ring and surrounds the plurality of fan blades and extends radially inwardly toward the plurality of fan blades. The metal barrier structure is bonded directly to the honeycomb structure and surrounds the plurality of fan blades. The abradable coating layer is disposed on the barrier structure and faces the plurality of fan blades. The fan containment ring has a first radial thickness, the honeycomb structure has a second radial thickness, the barrier structure has a third radial thickness, and the abradable coating layer has a fourth radial thickness. The first radial thickness is either greater than the third radial thickness, less than third radial thickness, or equal to the third radial thickness. The second radial thickness is greater than the third radial thickness and the fourth radial thickness, and is either greater than the first radial thickness or equal to the first radial thickness. The fourth radial thickness is greater than at least the third radial thickness.

In another embodiment, a gas turbine engine includes a fan section, a compressor section, a combustor section, a turbine section, and an exhaust section disposed in flow series. The fan section includes a plurality of metallic fan blades disposed within a fan containment housing, and the fan containment housing includes a multilayer fan containment system that includes a metal fan containment ring, a metal honeycomb structure, a metal barrier, and an abradable coating layer. The metal fan containment ring surrounds the plurality of fan blades and has an inner surface and an outer surface. The metal honeycomb structure is bonded directly to the inner surface of the containment ring and surrounds the plurality of fan blades and extends radially inwardly toward the plurality of fan blades. The metal barrier structure is bonded directly to the honeycomb structure and surrounds the plurality of fan blades. The abradable coating layer is disposed on the barrier structure and faces the plurality of fan blades. The fan containment ring has a first radial thickness, the honeycomb structure has a second radial thickness, the barrier structure has a third radial thickness, and the abradable coating layer has a fourth radial thickness. The first radial thickness is either greater than the third radial thickness, less than third radial thickness, or equal to the third radial thickness. The second radial thickness is greater than the third radial thickness and the fourth radial thickness, and is either greater than the first radial thickness or equal to the first radial thickness. The fourth radial thickness is greater than at least the third radial thickness.

In yet another embodiment, a method of manufacturing a multilayer fan containment system includes providing a metal fan containment ring that is configured to surround a plurality of fan blades and has an inner surface and an outer surface. A metal honeycomb structure is bonded directly to an inner surface of the metal fan containment ring, such that the honeycomb structure extends radially inwardly from the metal fan containment ring. A metal barrier structure is bonded directly to the honeycomb structure, and an abradable coating layer is disposed on the barrier structure, such that the abradable coating layer will face the plurality of fan blades. The fan containment ring has a first radial thickness, the honeycomb structure has a second radial thickness, the barrier structure has a third radial thickness, and the abradable coating layer has a fourth radial thickness. The first radial thickness is either greater than the third radial thickness, less than third radial thickness, or equal to the third radial thickness. The second radial thickness is greater than the third radial thickness and the fourth radial thickness, and is either greater than the first radial thickness or equal to the first radial thickness. The fourth radial thickness is greater than at least the third radial thickness.

Furthermore, other desirable features and characteristics of the multilayer fan containment system and method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a partial, cross-sectional view of one example embodiment of a gas turbine engine;
FIG. 2 depicts a close-up cross-sectional view of a portion of the fan section of the gas turbine engine depicted in FIG. 1; and
FIGS. 3-8 depict, in simplified cross section form, relative radial thicknesses of the layers that make up a fan containment structure.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

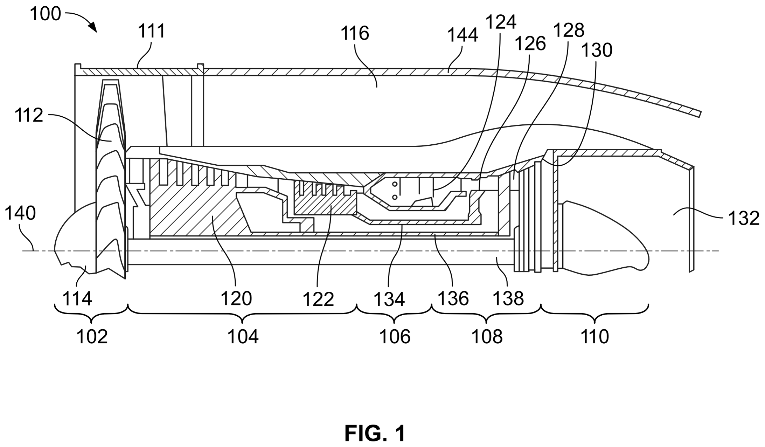

Referring first to FIG. 1, a partial, cross-sectional view of one example embodiment of a gas turbine engine 100 is depicted. In the depicted embodiment, the gas turbine engine 100 is an annular multi-spool turbofan gas turbine jet engine 100 within an aircraft, although other arrangements and uses may be provided. It should be noted that the non-illustrated portion of the gas turbine engine 100 is axisymmetric about a longitudinal axis 140.

The engine 100 includes fan section 102, a compressor section 104, a combustor section 106, a turbine section 108, and an exhaust section 110. The fan section 102, a portion of which is discussed in greater detail further below, includes a fan containment housing 111, and a fan 112 that is configured to rotate. The fan 112, when rotating, draws air into the fan containment housing 111 and accelerates it. A fraction of the accelerated air exhausted from the fan 112 is directed through a bypass section 116 and the remaining fraction of air exhausted from the fan 112 is directed into the compressor section 104.

In the embodiment of FIG. 1, the compressor section 104 includes an intermediate pressure compressor 120 and a high-pressure compressor 122. However, in other embodiments, the number of compressors in the compressor section 104 may vary. In the depicted embodiment, the intermediate pressure compressor 120 and the high-pressure compressor 122 sequentially raise the pressure of the air and directs a majority of the high-pressure air into the combustor section 106. A fraction of the compressed air bypasses the combustor section 106 and is used to cool, among other components, turbine blades in the turbine section 108.

In the combustor section 106, which includes an annular combustor 124, the high-pressure air is mixed with fuel and is combusted. The high-temperature combusted air is then directed into the turbine section 108. In the embodiment of FIG. 1, the turbine section 108 includes three turbines disposed in axial flow series, namely, a high-pressure turbine 126, an intermediate pressure turbine 128, and a low-pressure turbine 130. However, it will be appreciated that the number of turbines, and/or the configurations thereof, may vary. In the embodiment depicted in FIG. 1, the high-temperature combusted air from the combustor section 106 expands through and rotates each turbine 126, 128, and 130. The air is then exhausted through a propulsion nozzle 132 disposed in the exhaust section 110.

As the turbines 126, 128, and 130 rotate, each drives equipment in the engine 100 via concentrically disposed shafts or spools. Specifically, the high-pressure turbine 126 drives the high-pressure compressor 122 via a high-pressure spool 134, the intermediate pressure turbine 128 drives the intermediate pressure compressor 120 via an intermediate pressure spool 136, and the low-pressure turbine 130 drives the fan 112 via a low-pressure spool 138.

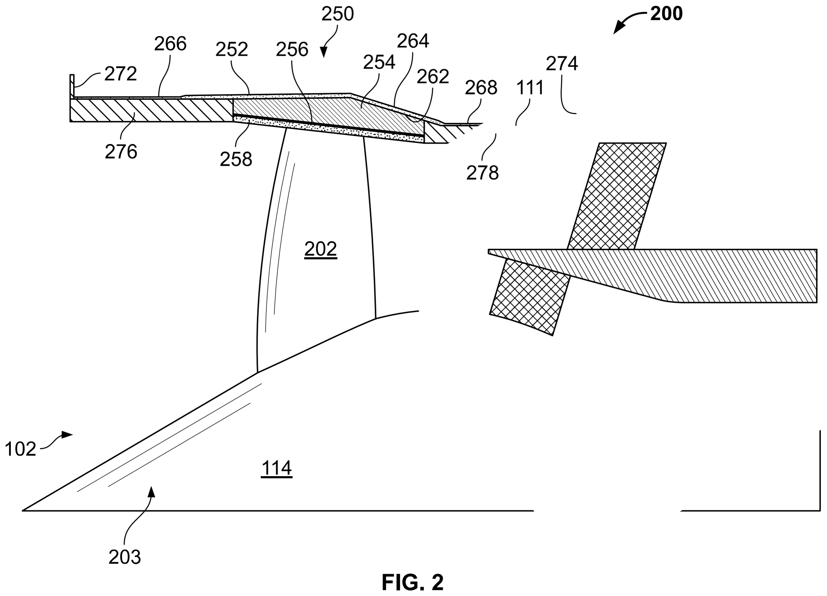

Referring now to FIG. 2, a close-up cross-sectional view of a portion 200 is depicted of the fan section 102 shown in FIG. 1. The depicted fan section 102 includes plurality of metallic fan blades 202 (for clarity, only one shown in FIG. 2) extending radially outward from, for example, a spinner 203. As is generally known, it is postulated that a fan blade 202 (or portion thereof) may become detached. To prevent a detached fan blade 202 (or portion thereof) from escaping the fan section 102, a fan containment system 250 is provided. The fan containment system 250 generally includes a fan containment ring 252, a honeycomb structure 254, a barrier structure 256, and an abradable coating 258.

The fan containment ring 252, which is made of a metal, surrounds the plurality of fan blades 202 and has an inner surface 262 and an outer surface 264. The honeycomb structure 254, which is also made of a metal, is bonded directly to the inner surface 262 of the containment ring 252. The honeycomb structure 254 also surrounds the plurality of fan blades 202 and extends radially inwardly toward the plurality of fan blades 202. The barrier structure 256, which is also made of a metal, is bonded directly to the honeycomb structure 254 and also surrounds the plurality of fan blades 202. The abradable coating 258 is disposed on the barrier structure 256 and faces the plurality of fan blades 202.

The metals that the fan containment ring 252, the honeycomb structure 254, and the barrier structure 256 are made of may vary. Some non-limiting examples of suitable metals for the fan containment ring 252 include aluminum, nickel, steel, and titanium. Some non-limiting examples of suitable metals for the honeycomb structure 254 include aluminum, nickel, and steel. And some non-limiting examples of suitable metals for the barrier structure 256 include aluminum, nickel, and steel.

The abradable coating 258, as is generally known, functions to maintain clearance between the rotating (i.e., fan blades 202) and stationary parts of the fan section 102. The abradable coating 258 additionally mitigates potential damage to the barrier structure 256, which may potentially occur during normal operation when the tips of the fan blades 202 occasionally rub the barrier structure 256. It will be appreciated that the abradable coating 258 may be made of any one of numerous known materials that are presently used as abradable coatings in turbofan gas turbine engines.

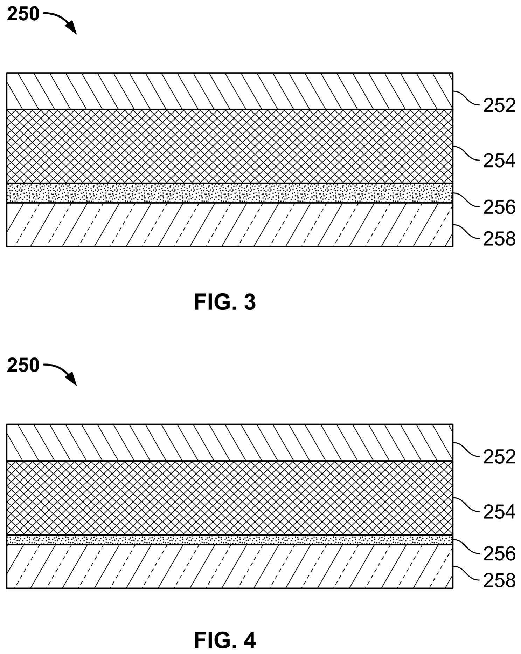

In addition to the various metals and materials, the radial thicknesses and the relative radial thicknesses of the fan containment ring 252, the honeycomb structure 254, the barrier structure 256, and the abradable coating 258 may vary depending, for example, on the various metals and materials used. For example, the fan containment ring 252 has a first radial thickness (TH₁), the honeycomb structure 254, at its thickest point, has a second radial thickness (TH₂), the barrier structure 256 has a third radial thickness (TH₃), and the abradable coating 258 has a fourth radial thickness (TH₄). Additionally, the relative radial thicknesses of the fan containment ring 252, the honeycomb structure 254, the barrier structure 256, and the abradable coating 258 may vary depending, for example, on the various metals and materials used. The variations in relative radial thicknesses are described below and are illustrated, in simplified cross section form, in FIGS. 3-8. It will be appreciated that these descriptions and depictions are merely examples of embodiments with the specified materials, and that the relative thicknesses may be different for different materials.

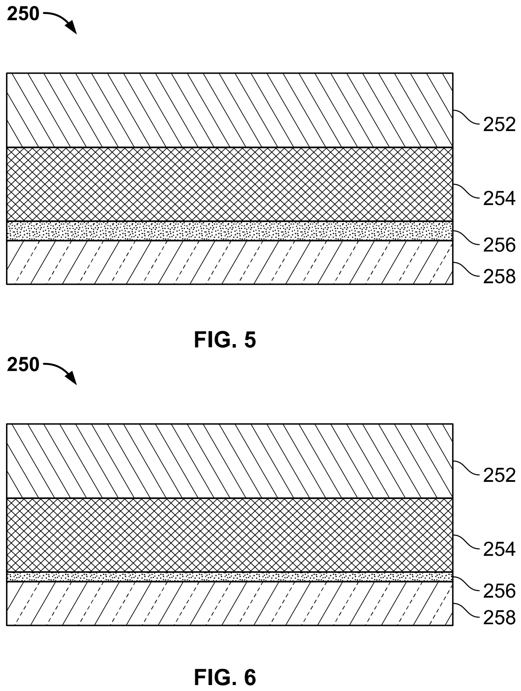

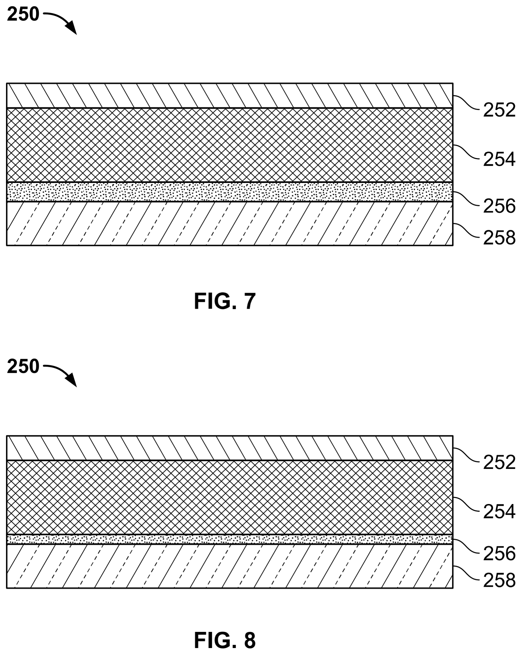

Depending on the embodiment, the first radial thickness may be either greater than the third radial thickness, less than third radial thickness, or equal to the third radial thickness. For example, when the fan containment ring 252 is made of titanium and the barrier structure 256 is made of steel, nickel, or aluminum (see FIGS. 3 & 4), the first radial thickness is greater than the third radial thickness (TH₁>TH₃); when the fan containment ring 252 is made of aluminum and the barrier structure 256 is made of steel, nickel, or aluminum (see FIGS. 5 & 6), the first radial thickness is greater than the third radial thickness (TH₁>TH₃); when the fan containment ring 252 is made of steel or nickel and the barrier structure 256 is made of aluminum (see FIG. 7), the first radial thickness may be either less than third radial thickness (TH₁<TH₃) or equal to (or substantially equal to) the third radial thickness (TH₁=TH₃); and when the fan containment ring 252 is made of steel or nickel and the barrier structure 256 is made of steel or nickel (see FIG. 8), the first radial thickness is greater than third radial thickness (TH₁>TH₃).

The second radial thickness is greater than the third radial thickness and the fourth radial thickness and, depending on the embodiment, is either greater than the first radial thickness or equal to the first radial thickness. For example, when the fan containment ring 252 is made of titanium, steel, or nickel (see FIGS. 3, 4, 7, & 8), the second radial thickness is greater than the first radial thickness (TH₂>TH₁). However, when the fan containment ring 252 is made of aluminum (see FIGS. 5 & 6), the second radial thickness is equal to (or substantially equal to) the first radial thickness (TH₂=TH₁).

The fourth radial thickness is greater than the third radial thickness and is either greater than the first radial thickness or less than the first radial thickness. For example, when the fan containment ring 252 is made of titanium, steel, or nickel (see FIGS. 3, 4, 7, & 8), the fourth radial thickness is greater than the first radial thickness (TH₄>TH₁) and the third radial thickness (TH₄>TH₃). However, when the fan containment ring 252 is made of aluminum (see FIGS. 5 & 6), the fourth radial thickness is less than the first radial thickness (TH₄<TH₁) and is greater than the third radial thickness (TH₄>TH₃).

Although the specific radial thicknesses may vary, some non-limiting examples of suitable thicknesses, in which the fan containment ring 252 is made of titanium, the honeycomb structure 254 is made of aluminum, and the barrier structure 256 is made of aluminum (e.g., FIG. 3), are as follows:
TH₁ may be between about 0.16 in. and about 0.30 in.;
TH₂ may be between about 0.50 in. and about 1.0 in.;
TH₃ may be between about 0.08 in. and about 0.17 in.; and
TH₄ may be between about 0.4 in. and about 0.75 in.

The multilayer fan containment system 250, when assembled together in the depicted sandwich structure, will exhibit a total flexural rigidity. As may be appreciated, each of the constituents of the multilayer fan containment system 250, with the exception of the abradable coating 258, will individually supply a certain percentage of the total flexural rigidity. It should be noted that, while each individual constituent of the multilayer fan containment system 250 may not have significant strength, when assembled into the sandwich structure, each provides significant contributions in total kinetic energy absorption of a released fan blade 202.

With the above in mind, it is noted that the fan containment ring 252, by itself, exhibits a first flexural rigidity (FR1) that is equal to a first percentage of the total flexural rigidity (FR%₁). The honeycomb structure 254, by itself, exhibits a second flexural rigidity (FR₂) that is equal to a second percentage of the total flexural rigidity (FR%₂). The barrier structure 256, by itself, exhibits a third flexural rigidity (FR₃), the third flexural rigidity equal to a third percentage of the total flexural rigidity (FR%₃). In one particular embodiment, the first percentage is less than the second percentage and greater than the third percentage (FR%₂ > FR%₁ > FR%₃), and the second percentage is greater than the first percentage and the third percentage (FR%₁ < FR%₂ > FR%₃). It will be appreciated that the individual percentages may differ for various embodiments. However, non-limiting examples of the individual percentages for one embodiment, in which the fan containment ring 252 is made of titanium, the honeycomb structure 254 is made of aluminum, and the barrier structure 256 is made of aluminum, are as follows: ${FR%}_{1} = 16.1 ;$ ${FR%}_{2} = 49.8 ;$ and ${FR%}_{3} = 2.3 .$

The fan containment system 250 exhibits a total stiffness (Kₜₒₜₐₗ). The fan containment ring 252, the honeycomb structure 254, the barrier structure 256, and the abradable coating 258, each have individual densities, and each contributes different stiffnesses to the total stiffness (Kₜₒₜₐₗ). In addition, the honeycomb structure 254, the barrier structure 256, and the abradable coating 258, each have a ratio of their individual stiffness contributions to their individual densities. It will be appreciated, however, that the stiffness to density ratio of the abradable coating 258 is relatively insignificant. Thus, a discussion thereof is not included in the following.

More specifically, the fan containment ring 252 has a first density (ρ₁) and contributes a first stiffness (K₁) to the total stiffness (Kₜₒₜₐₗ) of the fan containment system 250. The fan containment ring also has a first ratio (K₁/ ρ₁) of the first stiffness to first density. The honeycomb structure 254 has a second density (ρ₂) and contributes a second stiffness (K₂) to the total stiffness (Kₜₒₜₐₗ) of the fan containment system 250, and has a second ratio (K₂/ ρ₂) of second stiffness to second density. The barrier structure 256 has a third density (ρ₃) and contributes a third stiffness (K₃) to the total stiffness (Kₜₒₜₐₗ) of the fan containment system 250, and has a third ratio (K₃/ ρ₃) of third stiffness to third density. It will be appreciated that the first, second, and third ratios may differ for various embodiments. However, non-limiting examples of the ratios for one embodiment, in which the fan containment ring 252 is made of titanium, the honeycomb structure 254 is made of aluminum, and the barrier structure 256 is made of aluminum, are as follows: $\left({K}_{1}/{ρ}_{1}\right) = 179 , 957.7 {in}^{2} ;$ $\left({K}_{2}/{ρ}_{2}\right) = 4.52 \times {10}^{7} {in}^{2} ;$ and $\left({K}_{3}/{ρ}_{3}\right) = 41 , 493.8 {in}^{2} .$

In addition to the above, it is seen that the fan containment ring 252 includes a forward end 266 and an aft end 268, and forms part of the fan containment housing 111. As FIG. 2 further depicts, the fan containment housing further includes a forward flange portion 272 an aft flange portion 274, a forward acoustic panel 276, and an aft acoustic panel 278. The forward flange portion 272 extends axially from the forward end 266 of the containment ring 252, and the aft flange portion 274 extends axially from the aft end 268 of the containment ring 252. The forward acoustic panel 276 is coupled to, and extends radially inwardly from, the forward flange portion 272, and the aft acoustic panel 278 is coupled to, and extends radially inwardly from, the aft flange portion 274. As is generally known, the forward and aft acoustic panels 276, 278 are configured to reduce the noise signature of the engine 100.

With the above-described structure, it is noted that, in the unlikely event of a detached fan blade event, the fan containment ring 252 provides the main containment capability. Although the abradable coating 258 provides minimal containment capability, it does provide some since it is the portion of the fan containment system 250 that initially interacts with the released blade tip during the detached fan blade event. The barrier structure 256 provides containment capability by spreading the load across a relatively large area of the honeycomb structure 254, utilizing the crushing strength of the honeycomb structure 254 to resist the impact of the released blade 202.

The fan containment system 250 described herein provides improved impact resistance without unduly increasing the weight of the fan section and the engine. The system described herein provides a relatively lighter weight fan containment housing 111, while being fully capable of containing all the debris associated with a detached fan blade 202 within the fan containment system 250. The fan containment system 250 is fully capable meeting all the certification requirements without causing piercing or cracking during a detached blade event.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A multilayer fan containment system for a gas turbine engine having a plurality of metallic fan blades, the multilayer fan containment system comprising:
a metal fan containment ring surrounding the plurality of fan blades and having an inner surface and an outer surface;
a metal honeycomb structure bonded directly to the inner surface of the containment ring and surrounding the plurality of fan blades, the honeycomb structure extending radially inwardly toward the plurality of fan blades;
a metal barrier structure bonded directly to the honeycomb structure and surrounding the plurality of fan blades; and
an abradable coating layer disposed on the barrier structure and facing the plurality of fan blades,
wherein:
the fan containment ring has a first radial thickness;
the honeycomb structure has a second radial thickness;
the barrier structure has a third radial thickness;
the abradable coating layer has a fourth radial thickness;
the first radial thickness is either greater than the third radial thickness, less than third radial thickness, or equal to the third radial thickness;
the second radial thickness is greater than the third radial thickness and the fourth radial thickness, and is either greater than the first radial thickness or equal to the first radial thickness; and
the fourth radial thickness is greater than at least the third radial thickness.

2. The multilayer fan containment system of claim 1, wherein:
the fan containment ring includes a forward end and an aft end and forms part of a fan containment housing; and
the fan containment housing further comprises:
a forward flange portion extending axially from the forward end of the containment ring; and
an aft flange portion extending axially from the aft end of the containment ring.

3. The multilayer fan containment system of claim 2, further comprising:
a forward acoustic panel coupled to, and extending radially inwardly from, the forward flange portion; and
an aft acoustic panel coupled to, and extending radially inwardly from, the aft flange portion.

4. The multilayer fan containment system of claim 1, wherein the multilayer fan containment system exhibits a total flexural rigidity, and wherein:
the fan containment ring, by itself, exhibits a first flexural rigidity, the first flexural rigidity equal to a first percentage of the total flexural rigidity;
the honeycomb structure, by itself, exhibits a second flexural rigidity, the second flexural rigidity equal to a second percentage of the total flexural rigidity;
the barrier structure, by itself, exhibits a third flexural rigidity, the third flexural rigidity equal to a third percentage of the total flexural rigidity;
the first percentage is less than the second percentage and greater than the third percentage; and
the second percentage is greater than the first percentage and the third percentage.

5. The multilayer fan containment system of claim 1, wherein:
the multilayer fan containment system exhibits a total stiffness;
the fan containment system contributes a first stiffness to the total stiffness;
the honeycomb structure contributes a second stiffness to the total stiffness; and
the barrier structure contributes a third stiffness to the total stiffness.

6. The multilayer fan containment system of claim 5, wherein:
the fan containment ring, the honeycomb structure, and the barrier structure have a first density, a second density, and a third density, respectively;
the fan containment ring has a first ratio of first stiffness to first density;
the honeycomb structure has a second ratio of second stiffness to second density; and
the barrier structure has a third ratio of third stiffness to third density.

7. A method of manufacturing a multilayer fan containment system, comprising:
providing a metal fan containment ring that is configured to surround a plurality of fan blades and has an inner surface and an outer surface;
bonding a metal honeycomb structure directly to an inner surface of the metal fan containment ring, such that the honeycomb structure extends radially inwardly from the metal fan containment ring;
bonding a metal barrier structure directly to the honeycomb structure; and
disposing an abradable coating layer on the barrier structure, such that the abradable coating layer will face the plurality of fan blades,
wherein:
the fan containment ring has a first radial thickness;
the honeycomb structure has a second radial thickness;
the barrier structure has a third radial thickness;
the abradable coating layer has a fourth radial thickness;
the first radial thickness is either greater than the third radial thickness, less than third radial thickness, or equal to the third radial thickness;
the second radial thickness is greater than the third radial thickness and the fourth radial thickness, and is either greater than the first radial thickness or equal to the first radial thickness; and
the fourth radial thickness is greater than at least the third radial thickness.

8. The method of claim 7, wherein the multilayer fan containment system exhibits a total flexural rigidity, and wherein:
the fan containment ring, by itself, exhibits a first flexural rigidity, the first flexural rigidity equal to a first percentage of the total flexural rigidity;
the honeycomb structure, by itself, exhibits a second flexural rigidity, the second flexural rigidity equal to a second percentage of the total flexural rigidity;
the barrier structure, by itself, exhibits a third flexural rigidity, the third flexural rigidity equal to a third percentage of the total flexural rigidity;
the first percentage is less than the second percentage and greater than the third percentage; and
the second percentage is greater than the first percentage and the third percentage.

9. The method of claim 7, wherein:
the multilayer fan containment system exhibits a total stiffness;
the fan containment system contributes a first stiffness to the total stiffness;
the honeycomb structure contributes a second stiffness to the total stiffness; and
the barrier structure contributes a third stiffness to the total stiffness.

10. The method of claim 9, wherein:
the fan containment ring, the honeycomb structure, and the barrier structure have a first density, a second density, and a third density, respectively;
the fan containment ring has a first ratio of first stiffness to first density;
the honeycomb structure has a second ratio of second stiffness to second density; and
the barrier structure has a third ratio of third stiffness to third density.
